Europäisches Patentamt

European Patent Office

Office européen des brevets

(11) Veröffentlichungsnummer: **0 421 213 A2**

## EUROPÄISCHE PATENTANMELDUNG

(21) Anmeldenummer: 90118256.8

(51) Int. Cl.5: **G11B 5/706, G11B 5/712**

(22) Anmeldetag: **22.09.90**

(30) Priorität: **04.10.89 DE 3933183**

(43) Veröffentlichungstag der Anmeldung:
**10.04.91 Patentblatt 91/15**

(84) Benannte Vertragsstaaten:
**DE FR GB**

(71) Anmelder: **BAYER AG**

**W-5090 Leverkusen 1 Bayerwerk(DE)**

(72) Erfinder: **Gerum, Johannes, Dr.**
**Robert-Koch-Strasse 38**
**W-8901 Stadtbergen(DE)**
Erfinder: **Wimbersky, Werner, Dr.**
**Pilsenseestrasse 17**
**W-8000 München 70(DE)**
Erfinder: **Kathrein, Hendrik, Dr.**
**Guertelweg 4**
**W-4053 Juechen-Aldenhoven(DE)**
Erfinder: **van Bonn, Karl-Heinz, Dr.**
**Vinngrabenstrasse 44**
**W-4130 Moers(DE)**
Erfinder: **Woditsch, Peter, Dr.**
**Deswatinesstrasse 83**
**W-4150 Krefeld(DE)**

(54) Chromhaltige magnetische Eisenoxidpigmente, Verfahren zu ihrer Herstellung sowie deren Verwendung.

(57) Die Erfindung betrifft magnetische Eisenoxidpigmente mit einer Beschichtung von Chromverbindungen, Verfahren zu ihrer Herstellung sowie deren Verwendung.

# CHROMHALTIGE MAGNETISCHE EISENOXIDPIGMENTE, VERFAHREN ZU IHRER HERSTELLUNG SOWIE DEREN VERWENDUNG

Die vorliegende Erfindung betrifft magnetische Eisenoxidpigmente mit einer Beschichtung von Chromverbindungen, Verfahren zu ihrer Herstellung sowie deren Verwendung.

Es ist bereits bekannt, daß neben den speichertechnischen Eigenschaften eines magnetischen Aufzeichnungsträgers auch alle mechanischen Eigenschaften durch den Hauptbestandteil der Magnetschicht, nämlich das magnetische Pigment, maßgeblich beeinflußt werden.

So beeinflussen die Oberflächeneigenschaften der Pigmente z.B. die Pigmenthaltekraft in der Bindemittelmatrix und damit das Abriebverhalten eines magnetischen Aufzeichnungsträgers.

Die Adsorptionsneigung der Bindemittelkomponenten an der Pigmentoberfläche läßt sich durch Adsorptionsisothermen beschreiben. Quantitative Maßzahlen zur Beschreibung der Bindemittelaffinität an eine Pigmentoberfläche werden z.B. mittels Durchflußmikrokalorimetrie, im Reaktorkalorimeter, durch Bestimmung das Zetapotentials oder gravimetrisch durch Rückwägung des nicht adsorbierten Anteils ermittelt.

Dabei werden nicht nur große Unterschiede von Pigmentklasse zu Pigmentklasse wie z.B. zwischen $\gamma$-$Fe_2O_3$, bertholliden Eisenoxidphasen zwischen Maghämit und Magnetit, $Fe_3O_4$, Co-Ferrit, $CrO_2$ oder Metallpulver gefunden, sondern bereits innerhalb einer Pigmentklasse, soweit der Herstellungsablauf nicht vollständig identisch ist.

Unterschiedliches Adsorptionsverhalten der magnetischen Pigmente wirkt sich jedoch nicht nur auf die Bindemittelkomponente, sondern gleichermaßen auf die niedermolekularen Rezepturbestandteile aus.

So muß insbesondere bei den zur Verbesserung des Laufverhaltens des magnetischen Aufzeichnungsträgers zugesetzten Fettsäuren darauf geachtet werden, daß sie nicht in Konkurrenzadsorption mit den adsorbierten Bindemittelkomponenten oder den evtl. zugesetzten Dispergierhilfsstoffen treten. Dadurch wird einmal die das Laufverhalten verbessernde Wirkung der Fettsäuren abgeschwächt und darüber hinaus durch Desorption von ungewünschten, frei beweglichen, niedermolekularen Bestandteilen in der Magnetschicht eine Blockneigung des magnetischen Aufzeichnungsträgers insbesondere unter feuchtwarmen Betriebsbedingungen erzeugt.

Darüber hinaus ist bekannt, daß die Oberfläche des magnetischen Pigmentes auch die Vernetzung der hochmolekularen Bindemittelkomponenten beeinflußt.

Folgende drei Fälle sind zu unterscheiden:

Die durch Spuren freier Metallsalze katalysierte Isocyanatreaktion, die insbesondere an Polyurethanen die Verknüpfung der Polymerketten über Urethangruppenbildung beschleunigt und dabei den meist unerwünschten Aufbau eines Polyharnstoffgerüstes durch Reaktion der mehrfunktionellen Isocyanatkomponente mit in Spuren vorhandenem Wasser unterdrückt.

Ebenfalls durch Spuren von durch das magnetische Pigment eingeschleppten Metallsalzen wird eine Umurethanisierung der Polyurethanbindemittelkomponente katalysiert, wodurch eine Verbreiterung der Molekulargewichtsverteilung und damit eine nachteilige Beeinflussung der mechanischen Eigenschaften des magnetischen Aufzeichnungsträgers verbunden ist.

Weiter ist bekannt, daß insbesondere bei $CrO_2$-haltigen Magnetschichten eine unabhängig von einer evtl. parallel laufenden Isocyanatvernetzung, insbesondere mit Vinylchloridcopolymerisaten als Bindemittelkomponente, eine deutliche Verbesserung der mechanischen Schichteigenschaften erhalten wird.

Durch die gezielte Einstellung der Oberflächenchemie des magnetischen Pigmentes lassen sich somit Adsorption/De sorption der hoch- und niedermolekularen Rezepturkomponenten, die Zeitabhängigkeit des Gleitmittelhaushaltes, wie die physikalische und chemische Vernetzung der Bindemittelkomponenten, beeinflussen.

So werden in JA-5 138 094 zwar Co-, Cr- oder Mn-dotierte Berthollide beschrieben zur Verbesserung der magnetischen Stabilität und zur Erhöhung der Koerzitivkraft. Durch Körperdotierung des magnetischen Pigmentes mit den genannten Elementen kann eine ausreichende Verbesserung der Laufeigenschaften aber nicht erzielt werden.

In DE-A-3 537 624 wird ebenfalls ein chromhaltiges magnetisches Pigment beschrieben; jedoch werden als Pigmente ausschließlich plättchenförmige Hexaferrite genannt, die ebenfalls die Dotierungskomponente gleichmäßig über das gesamte Pigmentteilchen verteilt enthalten; darüber hinaus verhalten sich derartige Pigmente in ihrem Adsorptionsverhalten gegenüber hoch- und niedermolekularen Komponenten völlig unterschiedlich zu den erfindungsgemäßen nadelförmigen magnetischen Pigmentteilchen.

In der DE-A-2 343 562 wird die Herstellung eines mit Co, Ni, Cr oder anderen Elemente körperdotierten Ferrits beschrieben, wobei merkliche Mengen Alkali oder Erdalkali in das magnetische Pigment eingebaut werden. Mit diesem Material hergestellte Schichten sind magnetomechanisch stabiler bei erhöhter Empfind-

lichkeit und Koerzitivkraft. Insbesondere die als Bindemittelkomponente eingesetzten Polyurethane werden in alkalischer Umgebung je doch hydrolytisch gespalten, was bei längerer Lagerung das magnetischen Mediums zu einer Verschlechterung der Laufeigenschaften führt.

In JP-A-326 693 (1988) wird die Nachbehandlung von Magnetpigmenten mit Hydroxiden von Ti, Zr, V, Mo, W, Cu, Ag, Al, Sn, Nb, Ta, Sb, Cr und Ni beschrieben, die eine Verbesserung von Br/Bs und OR und eine Senkung der Viskosität des Lackansatzes bewirkt. Allerdings wird weder die Wirksamkeit von Ag, Nb, Ta und Cr durch Beispiele belegt, noch wird ein Verfahren zur Durchführung der Beschichtung mit diesen Elementen angegeben.

Der vorliegenden Erfindung liegt die Aufgabe zugrunde, ein magnetisches Pigment bereitzustellen, das die Herstellung von Aufzeichnungsträgern mit verbesserten Laufeigenschaften ohne nachteilige Auswirkungen auf andere Qualitätsdaten, etwa die speichertechnische Empfindlichkeit, erlaubt.

Es wurde überraschenderweise gefunden, daß sich insbesondere die Laufeigenschaften eines magnetischen Aufzeichnungsträgers insbesondere nach Strapaze oder Lagerung über längere Zeit deutlisch verbessern, wenn als magnetisches Pigment ein Eisenoxidpigment mit einer Beschichtung aus Chromverbindungen eingesetzt wird, bei denen der mit Hilfe von Zetapotentialmessungen bestimmbare isoelektrische Punkt bei einem pH-Wert zwischen 8 und 9,5 liegt.

Für die Wirksamkeit entscheidend ist die Art der aufgebrachten Chromverbindung, die sich mit Hilfe dem Adsorptionsverhaltens von $H_3O^+$ - bzw. $OH^-$ -Ionen charakterisieren läßt. Üblicherweise geschieht dies mit Hilfe von Zetapotentialmessungen (Meßgerät PEN KEM System 2000), wobei die elektrokinetische Beweglichkeit von 0,001 gew.-%igen Suspensionen in Abhängigkeit vom pH-Wert aufgenommen wird.

Besonders gute Ergebnisse werden mit erfindungsgemäßen Eisenoxidpigmenten erzielt, deren Chromgehalt, bezogen auf das Eisenoxidpigment, zwischen 0,1 und 10 Gew.-%, vorzugsweise zwischen 0,5 und 3 Gew.-%, liegt.

Der positive Effekt auf die Laufeigenschaften der mit den erfindungsgemäßen Pigmenten hergestellten Bänder wird unabhängig von der jeweiligen Eisenoxidpigment-Klasse erreicht. Bevorzugte Eisenoxidpigmente gemäß dieser Erfindung sind somit $\gamma$-$Fe_2O_3$, $Fe_3O_4$, berthollide Eisenoxidphasen zwischen Maghämit und Magnetit, Cobaltvolumendotierte Eisenoxide und/oder Cobalt-oberflächenbeschichtete Eisenoxidpigmente.

Gegenstand der Erfindung ist auch ein Verfahren zur Herstellung der erfindungsgemäßen chrombeschichteten Eisenoxidpigmente. Dieses Verfahren ist dadurch gekennzeichnet, daß die Chromverbindung bzw. Chromverbindungen bei einem pH-Bereich von 3 bis 10, vorzugsweise 6 bis 8, aus Chrom(III)-Salzlösungen durch Zugabe von Alkalien aufgefällt wird.

Das zu beschichtende Eisenoxidpulver wird zur Beschichtung mit der entsprechenden Chromverbindung in Wasser dispergiert. Anschließend wird ein Chrom(III)-Salz wie z.B. Kaliumchromalaun, Chromacetat, Chromoxalat, Chromsulfat oder ein Chromnitrat in gelöster Form zugegeben, wobei die Gew.-Anteile an Chrom zwischen 0,1 und 10 %, bezogen auf das eingesetzte Magnetpigment, variieren können. Die Temperatur sollte dabei 0° C nicht unterschreiten und 100° C nicht überschreiten. Vorzugsweise wird zwischen 25 und 40° C gearbeitet. Der pH-Verlauf wird während der Zugabe derart gesteuert, daß er sich im Bereich zwischen 3 und 10 bewegt. Vorzugsweise wird so vorgegangen, daß er im Neutralbereich zwischen 6 und 8 liegt. Das auf diese Weise beschichtete Magnetpigment wird filtriert, durch Waschen von löslichen Salzen befreit und anschließend getrocknet.

Das magnetische Pulver wird anschließend in einer geeigneten Menge Lösemittel, einer geeigneten Menge eines Dispergierhilfsmittels und einer Bindemittelmischung intensiv vermischt und einer Vordispergierung unterzogen, was z.B. an einem Dissolver, einem Kneter, einer Kolloidmühle oder anderen hochscherenden Aggregaten durchgeführt werden kann.

Die Feindispergierung erfolgt nun beispielsweise in einer Perlmühle, deren Mahlintensität durch Variation der Mahlkörpergröße und -füllung, der Drehzahl und des Lackdurchsatzes gesteuert werden kann.

Um eine möglichst enge Pigmentverteilungsbreite zu erhalten, wird vorzugsweise die magnetische Dispersion in mehreren Passagen von einem ersten Vorratsgefäß über eine oder mehrere beispielhaft genannte Perlmühlen in ein zweites Vorratsgefäß gefahren.

Nach Abschluß dieser Feindispergierstufe werden gegebenenfalls die restlichen Bindemittelanteile oder Additive der magnetischen Dispersion zugemischt.

Die anschließende Beschichtung des unmagnetischen Schichtträgers mit der Magnetdispersion erfolgt entsprechend dem Stand der Technik, z.B. mittels Reverse-Roll-Coater, Rasterdruck-, Extrudergießer.

Als Schichtträger können Folien aus Polyester wie Polyethylenterephthalat, Polyolefine wie Polypropylen, Cellulosederivate wie Triacetat, Polycarbonate oder starre Schichtträger aus nicht-magnetischen Metallen wie Aluminium oder keramische Materialien eingesetzt werden.

Die weitere Bearbeitung der beschichteten Materialien, wie die Oberflächenglättung durch Kalandern, Schneiden und Konfektionieren, erfolgt in bekannter Weise.

Um die Vorteile des erfindungsgemäßen Vorgehens zu belegen, werden folgende Eigenschaften eines auf 1/2" Breite getrennten Magnetbandes beschrieben.

## 1 Gleitreibung

Es wird die Schichtseite bzw. die Rückseite des Prüfbandes über einen gereinigten Stahlstift der Oberflächenrauhigkeit $R_a$ = 0,04 μm reversierend insgesamt 100-fach mit einer Auflagekraft von 50 Pont und einer Geschwindigkeit von 1,0 cm/s geführt und dabei die Zunahme der Reibungskraft gemessen.

## 2 Empfindlichkeit

Es wird auf einem VHS-Rekorder (JVC 210) die Empfind-lichkeit bei 5,0 MHz und 625 kHz gemessen; als Bezugsband dient ein interner Standard.

## 3 Dauerlauftest

Auf einem VHS-Rekorder wird der Pegelabfall eines 5 MHzSignales nach 100-facher Wiedergabe gemessen.

Gegenstand dieser Erfindung ist auch die Verwendung der erfindungsgemäßen Eisenoxidpigmente für die Herstellung von Magnetbändern.

Nachfolgend wird die Erfindung anhand von Beispielen näher erläutert, ohne daß hierin eine Einschränkung zu sehen ist.

## Beispiel 1

2 kg eines cobaltbeschichteten Ferritpigmentes (IHc = 52,5 kA/m, BET-Oberfläche 29 m²/g) werden in 7 l Wasser dispergiert. Unter Rühren erfolgt innerhalb 1 Stunde die gleichzeitige Zugabe einer Chrom(III)-Nitratlösung (211 g $Cr(NO_3)_3$ x $9H_2O$, gelöst in 1 l $H_2O$) und einer NaOH-Lösung (300 g NaOH/1).

Die Natronlauge wird so dosiert, daß der pH-Wert der Suspension zwischen 6 und 8 liegt. Im Anschluß an eine Nachrührphase von 30 Minuten erfolgt die Aufarbeitung durch Filtration, Waschung und Trocknung.

Das derart hergestellteMagnetpigment wird in eine Magnetlackrezeptur folgender Zusammensetzung eingearbeitet:

|  | Gew.-Teile |
|---|---|
| Magnetisches Pigment | 100 |
| Dispergator (Lecithin) | 5 |
| Bindemittel 1 (Vinylchloridvinylalkoholvinylacetat, Tg: +46° C) | 7 |
| Bindemittel 2 (Polyurethan, Tg: -12° C) | 14 |
| Fettsäuremischung | |
| (Palmitinsäure) | 0,5 |
| (Stearinsäure) | 0,5 |
| Lösemittel | |
| (Tetrahydrofuran (Methylisobutylketon) | |

Aus diesen Rezepturinhaltsstoffen wird nach obengenanntem Verfahren ein 1/2" breites Magnetband gefertigt und im Hinblick auf die Gleitreibung, die Videoempfindlichkeit und die Dauerlaufneigung geprüft.

## Beispiel 2

Es wird wie in Beispiel 1 verfahren; jedoch wird als magnetisches Pigment ein Co-haltiges Eisenoxidpigment ausgewählt mit einer $H_c$ von 56,5 kA/m und einer BET von 29 m² /g.

## Beispiel 3

Es wird wie in Beispiel 1 verfahren; jedoch wird eine Bindemittelmischung aus 14 Gew.-Teilen Vinylchloridcopolymerisat und 7 Gew.-Teilen Polyurethan, auf 100 Gew.-Teile des magnetischen Pigmentes bezogen, eingesetzt.

## Beispiel 4

Es wird wie in Beispiel 2 verfahren; jedoch werden Bindemittel 1 wie Bindemittel 2 in 10,5 Gew.-Teilen und anstelle der Fettsäuremischung lediglich 1,0 Gew.-Teile reiner n-Stearinsäure, auf 100 Gew.-Teile des magnetischen Pigments bezogen, eingesetzt.

## Vergleichsbeispiel 1

Es wird wie in Beispiel 1 verfahren; jedoch wird auf die Chrombeschichtung verzichtet.

## Vergleichsbeispiel 2

2 kg eines cobalthaltigen FeOOH-Pigmentes (Nadellänge 0,5 mm, BET-Oberfläche 42 m²/g, Co-Gehalt 2 %) werden in 50 l Wasser dispergiert. Mit 10 %iger $H_2SO_4$ wird die Suspension bei 80°C auf einen pH-Wert von 3 eingestellt und innerhalb von 30 min mit 1 l einer Chrom(III)-nitatlösung (190 g $Cr(NO_3)3$ x $9H_2O$) versetzt. Im Laufe von 4 Std. wird der pH-Wert durch Zugabe 10 %iger NaOH-Lösung auf 7 gestellt. Die Aufarbeitung der Suspension erfolgt durch Filtration, Waschungund Trocknung.

Die Konvertierung zum $\gamma$-$Fe_2O_3$ erfolgt durch Entwässerung des FeOOH-Pigmentes bei 400°C unter Luft, Reduktion des gebildeten $\alpha$-$Fe_2O_3$ bei 400°C unter angefeuchtetem Wasserstoff und Reoxidation des Pigmentes bei 300°C bis zu einem $Fe^{II}/Fe^{III}$-Verhältnis von 0,2.

Die Einarbeitung in die Brandrezeptur erfolgte wie in Beispiel 1 beschrieben.

## Vergleichsbeispiel 3

Es wird wie in Beispiel 1 verfahren; jedoch wird als magnetisches Pigment ein Co-haltiger Ferrit ohne Oberflächenbelegung und als Fettsäure lediglich n-Stearinsäure in einer Menge von 1,0 Gew.-Teilen, auf 100 Gew.-Teile des magnetischen Pigments bezogen, eingesetzt.

Die Ergebnisse der Versuchsbeispiele sind in Tabelle 1 dargestellt:

| Beispiel | Chromhaltig | I.E.P. bei pH | Gleitreibung der Magnestschicht | | Gleitreibung der Rückseite | | Empfindlichkeit | | Dauerlauftest |
|---|---|---|---|---|---|---|---|---|---|
| | | | 5. DL | 100. DL | 5. DL | 100.DL | 5 MHz dB | 625 kHz dB | |
| 1 | ja | 8,8 | 0,21 | 0,24 | 0,17 | 0,18 | +2,0 | +3,5 | sehr gut |
| 2 | ja | 8,5 | 0,23 | 0,25 | 0,20 | 0,20 | +2,5 | +2,5 | gut |
| 3 | ja | 8,8 | 0,20 | 0,24 | 0,23 | 0,22 | +2,0 | +3,5 | gut |
| 4 | ja | 8,8 | 0,19 | 0,23 | 0,20 | 0,19 | +2,5 | +3,5 | gut |
| Vergl.-bsp. 1 | nein | 10,2 | 0,28 | 0,38 | 0,30 | blockt | +2,0 | +3,0 | mittel |
| Vergl.-bsp. 2 | ja | 7,5 | 0,33 | 0,40 | 0,36 | blockt | +1,0 | -0,5 | schlecht |
| Vergl.-bsp. 2 | nein | 10,2 | 0,30 | 0,39 | 0,25 | 0,45 | +2,5 | +3,0 | mittel |

Hieraus geht hervor, daß die Beschichtung der Pigmente mit einer Chromverbindung, charakterisiert durch einen I.E.P. zwischen 8 und 9,5 die Herstellung von Bändern mit deutlich verbesserten Laufeigenschaften erlaubt.

## Ansprüche

1. Magnetische Eisenoxidpigmente mit einer Beschichtung von Chromverbindungen, dadurch gekennzeichnet, daß der mit Hilfe von Zetapotenfialmessungen bestimmbare isoelektrische Punkt bei einem pH-Wert zwischen 8 und 9,5 liegt.

2. Magnetische Eisenoxidpigmente gemäß Anspruch 1, dadurch gekennzeichnet, daß der Chromgehalt, bezogen auf das Eisencxidpigment, zwischen 0,1 und 10 Gew.-%, vorzugsweise zwischen 0,5 und 3 Gew.-%, liegt.

3. Magnetische Eisenoxidpigmente gemäß einem der Ansprüche 1 oder 2, dadurch gekennzeichnet, daß das Eisenoxidpigment ein $\gamma$-$Fe_2O_3$-Pigment ist.

4. Magnetische Eisenoxidpigmente gemäß einem der Ansprüche 1 oder 2, dadurch gekennzeichnet, daß das Eisenoxidpigment ein berthollides Eisenoxidpigment ist.

5. Magnetische Eisenoxidpigmente gemäß einem der Ansprüche 1 oder 2, dadurch gekennzeichnet, daß das Eisenoxidpigment ein Cobalt-volumendotiertes Eisenoxidpigment ist.

6. Magnetische Eisenoxidpigmente gemäß einem der Ansprüche 1 oder 2, dadurch gekennzeichnet, daß das Eisenoxidpigment ein Cobalt-oberflächenbeschichtetes Eisenoxidpigment ist.

7. Magnetische Eisenoxidpigmente nach einem der Ansprüche 1 oder 2, dadurch gekennzeichnet, daß das Eisenoxidpigment ein $Fe_3O_4$-Pigment ist.

8. Verfahren zur Herstellung chrombeschichteter Eisenoxidpigmente gemäß einem oder mehrerer der Ansprüche 1 bis 7, dadurch gekennzeichnet, daß die Chromverbindung bei einem pH-Bereich von 3 bis 10, vorzugsweise 6 bis 8, aus Chrom(III)-Salzlösungen durch Zugabe von Alkalien aufgefällt wird.

9. Verwendung der chrombeschichteten Eisenoxidpigmente gemäß einem oder mehrerer der Ansprüche 1 bis 8 zur Herstellung von Magnetbändern.